# EUROPÄISCHE PATENTANMELDUNG

(11) **EP 4 631 751 A1**
(43) Veröffentlichungstag der Anmeldung: **15.10.2025**
(21) Anmeldenummer: 25167969.2
(22) Anmeldetag: 02.04.2025
(51) Int. Cl.: B60D 1/02, A01B 59/00, B60D 1/40

(54) **KUPPLUNGSVORRICHTUNG FÜR EINEN FAHRZEUGANHÄNGER**

(30) Priorität: 10.04.2024 AT 503052024
(71) Anmelder: Scharmüller, Christine, 4892 Fornach (AT)
(72) Erfinder: Scharmüller, Christine, 4892 Fornach (AT)
(74) Vertreter: Gibler & Poth Patentanwälte KG

(57) **Zusammenfassung**

Es wird eine Kupplungsvorrichtung (1) für einen Fahrzeuganhänger umfassend ein Kupplungsgehäuse (2) mit einer Aufnahme (5) und eine Zugöse (3) mit einem Kupplungselement (4) vorgeschlagen, wobei ein Endbereich der Zugöse (3) in der Aufnahme (5) angeordnet ist, wobei die Zugöse (3) mittels einer Arretiervorrichtung (6) der Kupplungsvorrichtung (1) zwischen einem Fixierzustand (7) und einem Bewegungszustand (8) überführbar ist, wobei die Zugöse (3) in dem Fixierzustand (7) mit dem Kupplungsgehäuse (2) im Wesentlichen starr verbunden ist und in dem Bewegungszustand (8) zumindest innerhalb eines begrenzten Bewegungsbereichs (2) bewegbar ist, wobei ein im Wesentlichen stabförmiges Bewegungsbegrenzungsteil (10) an dem Endbereich der Zugöse (3) angeformt ist und zumindest ein Endbereich des Bewegungsbegrenzungsteils (10) in einer Aussparung (11) der Aufnahme (5) angeordnet ist, wobei - in dem Fixierzustand (7) gemessen - die Länge der Aussparung (12) entlang der Längsachse der Zugöse (13) mindestens das 1,5-Fache der Dicke des Bewegungsbegrenzungsteils (14) entlang der Längsachse der Zugöse (13) ist.

## Beschreibung

Die Erfindung betrifft eine Kupplungsvorrichtung für einen Fahrzeuganhänger gemäß dem Patentanspruch 1.

Es ist bekannt, dass Anhänger oder Arbeitsgeräte für land- und forstwirtschaftliche Fahrzeuge mittels einer Zugöse an einer Anhängerkupplung einer Zugmaschine, wie beispielsweise einem Traktor, angehängt und mit der Zugmaschine gezogen werden. Derartige Anhängerkupplungen sind dazu ausgelegt mit der Zugmaschine etliche Tonnen Anhängelast zu ziehen, wobei aufgrund des Gewichts des Anhängers oder des Arbeitsgeräts oftmals bereits das Kuppeln des Anhängers oder Arbeitsgeräts mit der Zugmaschine eine aufwendige Angelegenheit ist. Daher ist es nicht unüblich, dass der Anhänger oder das Arbeitsgerät über eine etliche Zeit an der Zugmaschine angehängt bleibt, wenn die Zugmaschine nicht zwischenzeitlich anderweitig benötigt wird.

In der Regel weist der Fahrzeuganhänger eine Zugöse auf, welche mit der Anhängerkupplung der Zugmaschine gekuppelt wird. Auch, wenn das Kuppeln eines üblichen Fahrzeuganhängers mit einer Zugmaschine in der Theorie eine sehr einfache Angelegenheit ist, ist das Kuppeln schwerer land- und forstwirtschaftlicher Fahrzeuge mit schweren Fahrzeuganhängern, welche je nach Kategorie jeweils mehr als 16 Tonnen betragen können, eine schwierige und schweißtreibende Angelegenheit. Dieser Umstand wird zusätzlich noch dadurch erschwert, dass in etlichen Ländern der Durchmesser einer Öffnung der Zugöse und der Durchmesser eines Kupplungsbolzens der Anhängerkupplung genormt sind. Aus diesem Grund kann beispielsweise ein Spielraum zwischen dem Kupplungsbolzen und einer Innenwand der Zugösenöffnung lediglich zwischen 1 bis 4 mm betragen, wenn der Kupplungsbolzen in der Öffnung der Zugöse angeordnet ist. Dabei ist es in der Praxis kaum möglich eine Zugmaschine mit mehreren Tonnen Gewicht derart exakt zu positionieren, dass die Öffnung des Kupplungselements der Zugöse fluchtend mit dem Verbindungsglied der Anhängerkupplung, insbesondere der Kupplungsbolzen, angeordnet ist.

Weiters ist das Positionieren der Zugmaschine und des Fahrzeuganhängers zueinander auch immer mit einem gefährlichen Hantieren auf engsten Raum an einem Kupplungspunkt zwischen der Anhängerkupplung und der Zugöse verbunden, wodurch die am Kupplungspunkt hantierende Person einem hohen Risiko von Verletzungen, insbesondere von Handverletzungen, ausgesetzt ist.

Aufgabe der Erfindung ist es daher eine Kupplungsvorrichtung für Fahrzeuganhänger der eingangs genannten Art anzugeben, mit welcher die genannten Nachteile vermieden werden können, mit welcher das Kuppeln eines schweren Fahrzeuganhängers an eine Zugmaschine erleichtert werden kann.

Erfindungsgemäß wird dies durch die Merkmale des Patentanspruches 1 erreicht.

Dadurch ergibt sich der Vorteil, dass in dem Bewegungszustand die Zugöse zumindest teilweise aus dem Kupplungsgehäuse der Kupplungsvorrichtung herausgeführt werden kann. Durch den begrenzten Bewegungsbereich in dem die Zugöse bewegt werden kann, kann das Ausrichten der Zugöse in einer Anhängerkupplung, beispielsweise innerhalb eines Aufnahmeraums einer Anhängerkupplung, und das Kuppeln mit der Anhängerkupplung, insbesondere mit einem Kupplungsbolzen, deutlich erleichtert werden. Durch den begrenzten Bewegungsbereich den das Bewegungsbegrenzungsteil in der Aussparung hat, kann der Bewegungsbereich auch an das Kupplungselement projiziert werden, sodass das Kupplungselement ebenfalls eine Bewegung in einem begrenzten Bewegungsbereich ausführen kann. Dadurch kann das Kupplungselement einfach mit dem Verbindungsglied der Anhängerkupplung gekuppelt werden, wobei nach der Kuppelung lediglich die gekuppelte Zugmaschine oder der gekuppelte Fahrzeuganhänger in Richtung der Aufnahme bewegt werden muss, um die Kupplungsvorrichtung in eine Arretierposition überzuführen und, wobei nachfolgend lediglich die Kupplungsvorrichtung in der Arretierposition fixiert werden muss. Dadurch kann auch die Sicherheit, insbesondere in Hinblick auf Handverletzungen, beim Kuppeln des Fahrzeuganhängers mit der Anhängerkupplung erhöht werden, da durch den begrenzten Bewegungsbereich beim Kuppelvorgang Spannungen zwischen dem Fahrzeuganhänger und der Zugmaschine reduziert werden können. Dadurch kann das Verletzungsrisiko beim Hantieren mit den Händen an einem Kupplungspunkt zwischen der Anhängerkupplung und der Zugöse, welches für gewöhnlich bei dem Heranführen des Fahrzeuganhängers und der Zugmaschine durchgeführt werden muss, und auf engsten Raum am Kupplungspunkt stattfindet, reduziert werden, da einerseits geringere Spannungen zwischen dem Fahrzeuganhänger und der Anhängerkupplung auftreten und andererseits die Zeit für das Hantieren reduziert werden kann. Der Wert für die Länge der Aussparung, also das 1,5-Fache der Dicke des Bewegungsbegrenzungsteils entlang der Längsachse der Zugöse, ist dabei derart gewählt, dass er deutlich über ein herstellungsbedingtes Spiel hinausgeht.

Die Erfindung betrifft weiters ein Verfahren zum Kuppeln einer Anhängerkupplung mit der erfindungsgemäßen Kupplungsvorrichtung gemäß dem Patentanspruch 15.

Die Erfindung hat daher weiters die Aufgabe einen Gattungsbegriff der eingangs genannten Art anzugeben, mit welchem das Kuppeln eines schweren Fahrzeuganhängers an eine Zugmaschine erleichtert werden kann.

Erfindungsgemäß wird dies durch die Merkmale des Patentanspruches 15 erreicht.

Die Vorteile des Verfahrens entsprechen den Vorteilen des oben genannten Gattungsbegriffs.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform der Kupplungsvorrichtung in axonometrischer Darstellung,
Fig. 2 die in Fig. 1 gezeigte bevorzugte Ausführungsform der Kupplungsvorrichtung in Vorderansicht,
Fig. 3 die in Fig. 1 gezeigte bevorzugte Ausführungsform der Kupplungsvorrichtung in Seitenansicht von links,
Fig. 4 die in Fig. 1 gezeigte bevorzugte Ausführungsform der Kupplungsvorrichtung in Draufsicht,
Fig. 5 einen Längsschnitt durch die bevorzugte Ausführungsform der Kupplungsvorrichtung im Fixierzustand,
Fig. 6 einen Schnitt parallel zur horizontalen Schwenkebene der bevorzugten Ausführungsform der Kupplungsvorrichtung im Fixierzustand,
Fig. 7 einen weiteren Schnitt parallel zur horizontalen Schwenkebene einer weiteren bevorzugten Ausführungsform der Kupplungsvorrichtung im Bewegungszustand,
Fig. 8 den in Fig. 6 gezeigten Schnitt der Kupplungsvorrichtung im Bewegungszustand in einer ersten horizontal ausgeschwenkten Position der Zugöse,
Fig. 9 den in Fig. 6 gezeigten Schnitt der Kupplungsvorrichtung im Bewegungszustand in einer zweiten horizontal ausgeschwenkten Position der Zugöse,
Fig. 10 eine bevorzugte Ausführungsform eines Kupplungssystems umfassend die bevorzugte Ausführungsform der Kupplungsvorrichtung und eine Anhängerkupplung,
Fig. 11 einen weiteren Längsschnitt durch die bevorzugte Ausführungsform der Kupplungsvorrichtung im Bewegungszustand in einer vertikal ausgeschwenkten Position, und
Fig. 12 einen weiteren Längsschnitt durch die bevorzugte Ausführungsform der Kupplungsvorrichtung im Bewegungszustand in einer horizontalen Endposition.

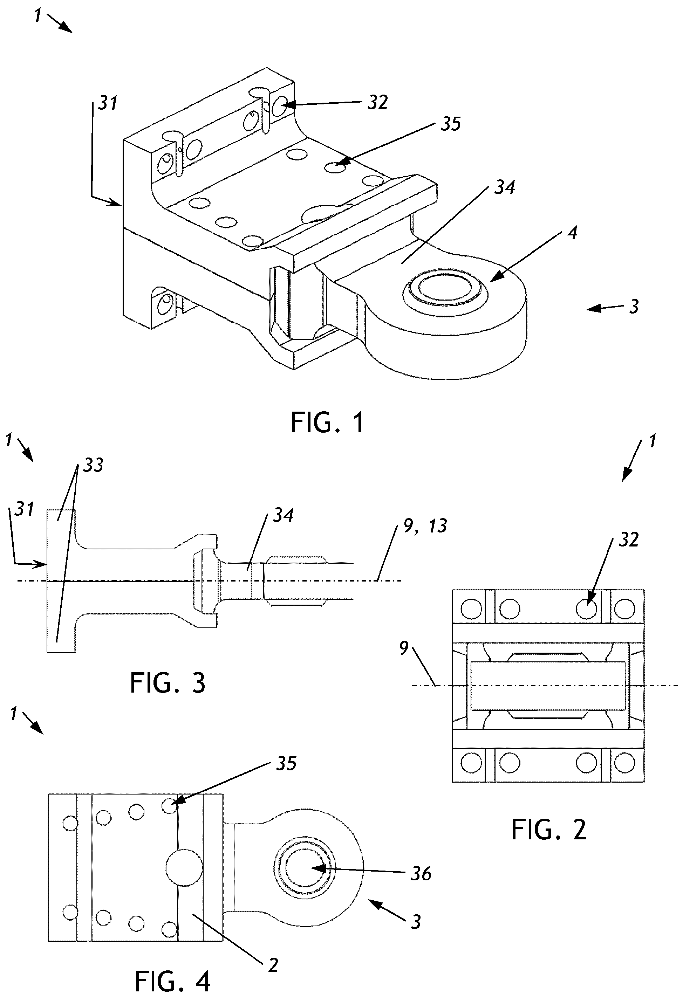

Die Fig. 1 bis 12 zeigen zumindest Teile einer Kupplungsvorrichtung 1 für einen Fahrzeuganhänger umfassend ein Kupplungsgehäuse 2 und eine Zugöse 3 mit einem Kupplungselement 4, wobei ein dem Kupplungselement 4 gegenüberliegender Endbereich der Zugöse 3 in einer Aufnahme 5 des Kupplungsgehäuses 2 angeordnet ist, wobei die Zugöse 3 mittels einer Arretiervorrichtung 6 der Kupplungsvorrichtung 1 zwischen einem Fixierzustand 7 und einem Bewegungszustand 8 überführbar ist, wobei die Zugöse 3 in dem Fixierzustand 7 mit dem Kupplungsgehäuse 2 im Wesentlichen starr verbunden ist und in dem Bewegungszustand 8 zumindest innerhalb eines begrenzten Bewegungsbereichs gegenüber dem Kupplungsgehäuse 2 auf einer horizontalen Schwenkebene 9 bewegbar ist, wobei ein im Wesentlichen stabförmiges Bewegungsbegrenzungsteil 10 an dem in der Aufnahme 5 angeordneten Endbereich der Zugöse 3 angeformt ist, wobei zumindest ein Endbereich des stabförmigen Bewegungsbegrenzungsteils 10 in einer in der Aufnahme 5 angeordneten Aussparung 11 des Kupplungsgehäuses 2 angeordnet ist und in dem Bewegungszustand 8 die Bewegung der Zugöse 3 gegenüber dem Kupplungsgehäuse 2 begrenzt, wobei - in dem Fixierzustand 7 gemessen - die Länge der Aussparung 12 entlang der Längsachse der Zugöse 13 mindestens das 1,5-Fache der Dicke des Bewegungsbegrenzungsteils 14 entlang der Längsachse der Zugöse 13 ist.

Weiters ist ein Verfahren zum Kuppeln einer Anhängerkupplung 28 mit der erfindungsgemäßen Kupplungsvorrichtung 1 vorgesehen, wobei die Kupplungsvorrichtung 1 mittels der Arretiervorrichtung 6 von dem Fixierzustand 7 in den Bewegungszustand 8 überführt wird, wobei in dem Bewegungszustand 8 die Zugöse 3 mittels des Kupplungselements 4 mit der Anhängerkupplung 28 gekuppelt wird, wobei nach der Kuppelung der Zugöse 3 mit der Anhängerkupplung 28 die Zugöse 3 in eine Arretierposition gebracht wird und die Kupplungsvorrichtung 1 mittels der Arretiervorrichtung 6 in dem Fixierzustand 7 fixiert wird.

Dadurch ergibt sich der Vorteil, dass in dem Bewegungszustand 8 die Zugöse 3 zumindest teilweise aus dem Kupplungsgehäuse 2 der Kupplungsvorrichtung 1 herausgeführt werden kann. Durch den begrenzten Bewegungsbereich in dem die Zugöse 3 bewegt werden kann, kann das Ausrichten der Zugöse 3 in einer Anhängerkupplung 28, beispielsweise innerhalb eines Aufnahmeraums einer Anhängerkupplung 28, und das Kuppeln mit der Anhängerkupplung 28, insbesondere mit einem Kupplungsbolzen 29, deutlich erleichtert werden. Durch den begrenzten Bewegungsbereich den das Bewegungsbegrenzungsteil 10 in der Aussparung 11 hat, kann der Bewegungsbereich auch an das Kupplungselement 4 projiziert werden, sodass das Kupplungselement 4 ebenfalls eine Bewegung in einem begrenzten Bewegungsbereich ausführen kann. Dadurch kann das Kupplungselement 4 einfach mit dem Verbindungsglied der Anhängerkupplung 28 gekuppelt werden, wobei nach der Kuppelung lediglich die gekuppelte Zugmaschine oder der gekuppelte Fahrzeuganhänger in Richtung der Aufnahme 5 bewegt werden muss, um die Kupplungsvorrichtung 1 in eine Arretierposition überzuführen und, wobei nachfolgend lediglich die Kupplungsvorrichtung 1 in der Arretierposition fixiert werden muss. Dadurch kann auch die Sicherheit, insbesondere in Hinblick auf Handverletzungen, beim Kuppeln des Fahrzeuganhängers mit der Anhängerkupplung 28 erhöht werden, da durch den begrenzten Bewegungsbereich beim Kuppelvorgang Spannungen zwischen dem Fahrzeuganhänger und der Zugmaschine reduziert werden können. Dadurch kann das Verletzungsrisiko beim Hantieren mit den Händen an einem Kupplungspunkt zwischen der Anhängerkupplung 28 und der Zugöse 3, welches für gewöhnlich bei dem Heranführen des Fahrzeuganhängers und der Zugmaschine durchgeführt werden muss, und auf engsten Raum am Kupplungspunkt stattfindet, reduziert werden, da einerseits geringere Spannungen zwischen dem Fahrzeuganhänger und der Anhängerkupplung 28 auftreten und andererseits die Zeit für das Hantieren reduziert werden kann. Der Wert für die Länge der Aussparung 12, also das 1,5-Fache der Dicke des Bewegungsbegrenzungsteils 14 entlang der Längsachse der Zugöse 13, ist dabei derart gewählt, dass er deutlich über ein herstellungsbedingtes Spiel hinausgeht.

Die Kupplungsvorrichtung 1 und/oder die Anhängerkupplung 28 sind bevorzugt eine Vorrichtung für land- und forstwirtschaftliche Fahrzeuge. Die Kupplungsvorrichtung 1 und/oder die Anhängerkupplung 28 sind dazu ausgelegt etliche Tonnen Anhängelast, insbesondere mindestens zwei Tonnen Anhängelast, vorzugsweise mindestens vier Tonnen Anhängelast, ziehen zu können.

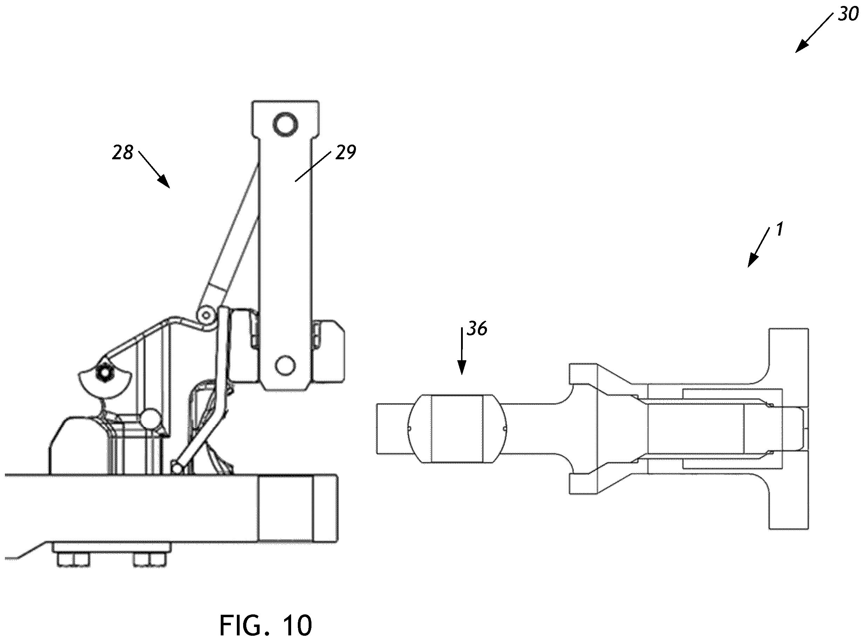

Die Anhängerkupplung 28 ist eine Vorrichtung zum Kuppeln mit einem Fahrzeuganhänger und/oder einem Arbeitsgerät. Als Arbeitsgerät kann beispielsweise eine Ballenpresse, ein Güllefassanhänger, ein Bodenbearbeitungsgerät oder ähnliches verstanden werden. Für die Kupplung des Fahrzeuganhängers oder des Arbeitsgeräts mit der Anhängerkupplung 28 weist der Fahrzeuganhänger oder das Arbeitsgerät die Kupplungsvorrichtung 1 mit der Zugöse 3 auf. Der Fahrzeuganhänger oder das Arbeitsgerät ist bevorzugt ein Anhänger oder ein Arbeitsgerät aus dem land- und forstwirtschaftlichen Bereich und weist demnach eine andere Größe und Masse als ein gewöhnlicher Fahrzeuganhänger für Personenkraftwagen (Pkw) auf. Die Kupplungsvorrichtung 1 kann mit einem Kupplungsbolzen 29 der Anhängerkupplung 28 verbunden werden. In einem gekuppelten Zustand der Anhängerkupplung 28 mit der Zugöse 3 der Kupplungsvorrichtung 1 ist der Kupplungsbolzen 29 innerhalb eines Kupplungslochs der Zugöse 3 angeordnet. In Fig. 10 ist eine bevorzugte Ausführungsform eines Kupplungssystems 30 umfassend die erfindungsgemäße Kupplungsvorrichtung 1 und die Anhängerkupplung 28 beispielhaft gezeigt, wobei die Kupplungsvorrichtung 1 nicht mit der Anhängerkupplung 28 gekuppelt ist.

Die Kupplungsvorrichtung 1 umfasst ein Kupplungsgehäuse 2. Bevorzugt ist das Kupplungsgehäuse 2 umfassend Metall, insbesondere aus Metall, ausgebildet.

Die Kupplungsvorrichtung 1 ist derart ausgebildet, dass die Kupplungsvorrichtung 1 an einen Fahrzeuganhänger befestigt werden kann. Bevorzugt kann diese Befestigung mittels einer Befestigungsfläche 31 durchgeführt werden. Bevorzugt wird die Kupplungsvorrichtung 1 mittels der Befestigungsfläche 31 und Befestigungsmittel an dem Fahrzeuganhänger befestigt. Dazu kann die Befestigungsfläche 31 bevorzugt Befestigungslöcher 32 zur Aufnahme der Befestigungsmittel, wie beispielsweise Schrauben oder Bolzen, aufweisen. Die Befestigungsfläche 31 und die Befestigungslöcher 32 sind in Fig. 1 und 2 beispielhaft gezeigt. Bevorzugt ist die Befestigungsfläche 31 Teil des Kupplungsgehäuses 2. Dies ist beispielhaft in den Fig. 1 bis 5 gezeigt.

Alternativ kann zur Befestigung der Kupplungsvorrichtung 1 an dem Fahrzeuganhänger oder ähnlichen auch eine Befestigungsplatte an dem Kupplungsvorrichtung 1, insbesondere an dem Kupplungsgehäuse 2, befestigt, insbesondere angeschraubt oder angeschweißt, sein.

Bevorzugt kann das Kupplungsgehäuse 2 eine Platte mit Halterungen sein, wobei die Aufnahme 5 in dem Bereich zwischen der Platte und den Halterungen ausgebildet ist.

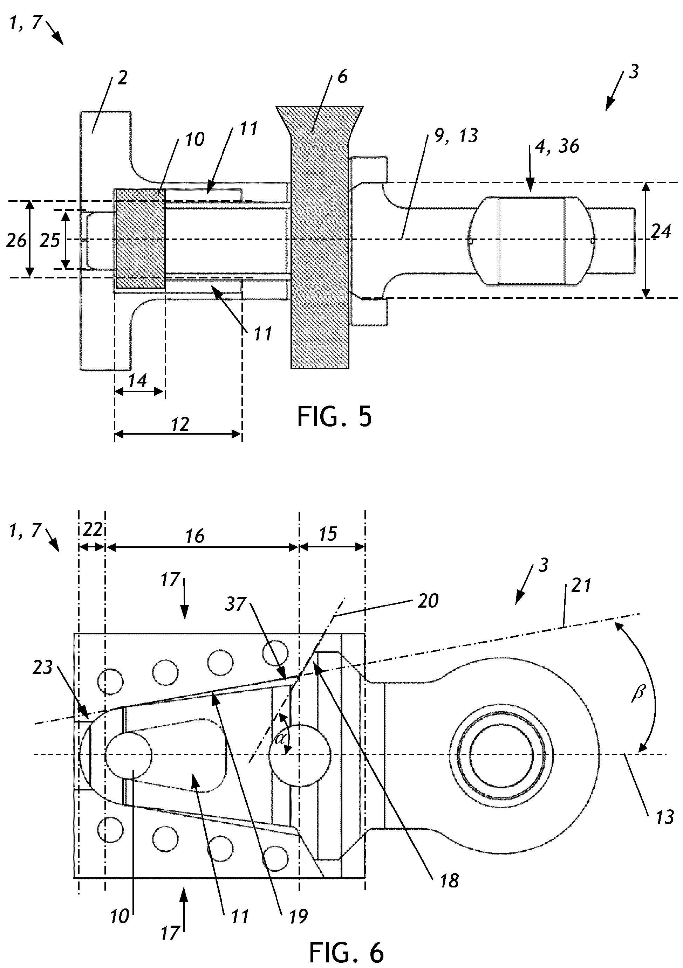

Bevorzugt kann die Aufnahme 5 des Kupplungsgehäuses 2 ein Hohlraum in dem Kupplungsgehäuse 2 sein, wobei der dem Kupplungselement 4 gegenüberliegender Endbereich der Zugöse 3 in dem Hohlraum des Kupplungsgehäuses 2 angeordnet ist. Dies ist in der Fig. 5 bis 10 ersichtlich.

Bevorzugt kann das Kupplungsgehäuse 2 aus wenigstens zwei Teilen, insbesondere zweiteilig, ausgebildet sein.

Bevorzugt können die wenigsten zwei Teile des Kupplungsgehäuses 2 miteinander mittels Befestigungsmittel lösbar verbunden sein. Dazu kann das Kupplungsgehäuse 2 bevorzugt Gehäuselöcher 35 zur Aufnahme der Befestigungsmittel, wie beispielsweise Schrauben oder Bolzen, aufweisen. Die Gehäuselöcher 35 sind in den Fig. 1, 4 und 6 bis 9 beispielhaft gezeigt.

Besonders bevorzugt kann vorgesehen sein, dass das Kupplungsgehäuse 2 aus wenigstens zwei Platten ausgebildet ist, und dass in zumindest einer der wenigstens zwei Platten die Aufnahme 5 des Kupplungsgehäuses 2 ausgebildet ist. In den Fig. 1 bis 5 ist eine bevorzugte Ausführungsform der Kupplungsvorrichtung 1 gezeigt, welche aus zwei Platten ausgebildet ist. Dadurch kann die Kupplungsvorrichtung 1 besonders einfach ausgebildet werden, wodurch insbesondere die Wartung oder der Austausch von beschädigten Bauteilen erleichtert wird.

Bevorzugt können die zwei Platten identisch ausgebildet sein, wobei die zwei Platten zur Ausbildung der Aufnahme 5 des Kupplungsgehäuses 2 spiegelbildlich zueinander angeordnet sind. In diesem Fall weist also jede Platte einen Teil der Aufnahme 5 auf, welche zur Ausbildung des Hohlraums gegenüberliegend zueinander angeordnet sind.

Wie in der in Fig. 1 bis 3 gezeigten besonders bevorzugten Ausführungsform weiters ersichtlich ist, ist an jeder Platte ein Befestigungsfortsatz 33 angeformt, welcher sich jeweils von der horizontalen Schwenkebene 9 weg, insbesondere normal zur horizontalen Schwenkebene 9 weg, erstreckt. In der Fig. 3 ist die horizontale Schwenkebene 9 mit den von der horizontal weg erstreckenden Befestigungsfortsätzen 33 deutlich ersichtlich. Durch diese zwei Befestigungsfortsätze 33 kann an dem dem Kupplungselement 4 abgewandten Ende der Kupplungsvorrichtung 1 die Befestigungsfläche 31 ausgebildet werden. Die beiden Flächen der zwei Befestigungsfortsätze 33 bilden dabei bevorzugt gemeinsam die Befestigungsfläche 31 aus.

Bevorzugt kann das Kupplungsgehäuse 2 einstückig ausgebildet sein. Dabei kann, wie bei der Ausführungsform des Kupplungsgehäuses 2 aus wenigstens zwei Teilen, die Befestigungsfläche 31 an dem dem Kupplungselement 4 abgewandten Ende des Kupplungsgehäuses 2 an dem Kupplungsgehäuse 2 ausgebildet sein. Bevorzugt kann die Befestigungsfläche 31 durch das Kupplungsgehäuse 2 ausgebildet sein.

Bevorzugt kann das Kupplungsgehäuse 2 ein Gussteil sein.

Die Zugöse 3 ist ein Bauteil mit einem Kupplungselement 4. Die Zugöse 3 ist Teil der Kupplungsvorrichtung 1. Das Kupplungselement 4 ist an einem ersten Endbereich der Zugöse 3 angeordnet, wobei sich ein zweiter Endbereich in die Aufnahme 5 des Kupplungsgehäuses 2 erstreckt. Bevorzugt erstreckt sich von dem Kupplungselement 4 eine Zugstange 34 weg. Der zweite in der Aufnahme 5 angeordnete Endbereich der Zugöse 3 ist dabei ein Teil der Zugstange 34. Bevorzugt ist die Zugöse 3 umfassend Metall, insbesondere aus Metall, ausgebildet.

Bevorzugt kann die Zugöse 3, insbesondere die Zugstange 34, im Wesentlichen plattenförmig ausgebildet sein.

Bevorzugt kann an der Zugstange 34 eine Führungsstange angeordnet sein. Die Führungsstange ist dabei an der Zugstange 34 außerhalb der Aufnahme 5 angeordnet. Dadurch kann das Führen der Zugöse 3 in dem Bewegungszustand 8, insbesondere beim An- und Abkuppeln, erleichtert werden.

Bevorzugt kann das Kupplungselement 4 eine Kugelpfanne oder eine Zugösenloch 36 sein. In den Fig. 1 bis 10 ist das Kupplungselement 4 als Zugösenloch 36 ausgebildet gezeigt. Das Zugösenloch 36 ist ein Loch in der Zugöse, welches den Kupplungsbolzen 29 der Anhängerkupplung 28 aufnehmen kann. Im Gegensatz dazu wird bei einem als Kugelpfanne ausgebildeten Kupplungselement 4, die Kugelpfanne auf eine Kupplungskugel der Anhängerkupplung 28 gesetzt. Diese beiden Kupplungsarten sind bekannte Kupplungsarten aus dem Stand der Technik, weshalb auf eine detailliertere Beschreibung der jeweiligen Kupplungsart verzichtet und auf einschlägige Fachliteratur verwiesen wird.

Bevorzugt kann die Zugöse 3 eine Kugelgelenkzugöse sein. Die Kugelgelenkzugöse ist eine Zugöse mit einem Kugelgelenk, sodass positive und negative vertikale Schwenkungen eines an einer Zugmaschine gekuppelten Anhängers, beispielsweise bei Durchfahrt durch Gräben, erreicht werden können. Die Kugelgelenkzugöse ist ein bekanntes Bauteil aus dem Stand der Technik, weshalb auf eine detailliertere Beschreibung der Kugelgelenkzugöse verzichtet und auf einschlägige Fachliteratur verwiesen wird. Sofern die Zugöse 3 als Kugelgelenkzugöse ausgebildet ist, ergibt sich bei der Verwendung der erfindungsgemäßen Kupplungsvorrichtung 1 weiters der Vorteil, dass beim Einkuppeln ein Verdrehen der Kugel reduziert werden kann. Das Verdrehen der Kugel kann insbesondere bei bereits verwendeten Kugelgelenkzugöse kann beim Einkuppeln durch den Kupplungsbolzen 29 sehr schnell vorkommen. Durch die Kupplungsvorrichtung 1 kann durch den begrenzenten Bewegungsbereich dies reduziert werden, da das Positionieren der Zugöse 3 erleichtert werden kann. Dadurch muss weiters auch nicht mit den Händen in den Kuppelbereich gegriffen werden, um die Kugelöffnung für den Kupplungsbolzen 29 auszurichten, wodurch die Verletzungsgefahr, insbesondere von Handverletzungen, reduziert werden können.

Die Zugöse 3 ist mittels der Arretiervorrichtung 6 zwischen dem Fixierzustand 7 und dem Bewegungszustand 8 überführbar. Die Arretiervorrichtung 6 ist Teil der Kupplungsvorrichtung 1.

Besonders bevorzugt kann vorgesehen sein, dass die Arretiervorrichtung 6 ein Arretierbolzen ist, welcher Arretierbolzen durch ein gemeinsames Durchgangsloch der Zugöse 3 und des Kupplungsgehäuses 2 steckbar ist. In der Fig. 5 ist eine als Arretierbolzen ausgebildete Arretiervorrichtung 6 beispielhaft gezeigt. Durch die Verwendung eines Arretierbolzens kann die Kupplungsvorrichtung 1 besonders einfach zwischen dem Fixierzustand 7 und dem Bewegungszustand 8 überführt werden, indem lediglich der Arretierbolzen entfernt werden muss. Dadurch kann die Arretiervorrichtung 6 zur Erfüllung ihrer Funktion besonders einfach ausgebildet werden. Dabei weist die Zugöse 3 und das Kupplungsgehäuse 2 jeweils ein Loch auf, wobei die beiden Löcher ein gemeinsames Durchgangsloch für den Arretierbolzen ausbilden. In dieses gemeinsame Durchgangsloch ist der Arretierbolzen in dem Fixierzustand 7 angeordnet und verhindert dadurch eine Bewegung der Zugöse 3 gegenüber dem Kupplungsgehäuse 2.

Bevorzugt ist die Zugöse 3 in dem Fixierzustand 7 in einer Arretierposition angeordnet. Der Fixierzustand 7 ist in Fig. 6 beispielhaft gezeigt. In Fig. 6 ist kein Arretierbolzen ersichtlich, sodass das gemeinsame Durchgangsloch ersichtlich ist, in welches zur Arretierung der Zugöse 3 gegenüber dem Kupplungsgehäuse 2 der Arretierbolzen einbringbar ist.

Erfindungsgemäß ist ein im Wesentlichen stabförmiges Bewegungsbegrenzungsteil 10 an dem in der Aufnahme 5 angeordneten Endbereich der Zugöse 3 angeformt. Erfindungsgemäß ist immer zumindest ein Endbereich des stabförmigen Bewegungsbegrenzungsteils 10 in der Aussparung 11 des Kupplungsgehäuses 2 angeordnet. Dies ist beispielhaft in Fig. 5 gezeigt, wobei ein Längsschnitt durch eine bevorzugt Ausführungsform der Kupplungsvorrichtung 1 ersichtlich ist. Wie in Fig. 5 ersichtlich ist, sind beide Endbereiche des stabförmigen Bewegungsbegrenzungsteils 10 in Aussparungen 11 des Kupplungsgehäuses 2 angeordnet.

Bevorzugt kann das Kupplungsgehäuse 2 zwei gegenüberliegend zueinander angeordnete Aussparungen 11 in der Aufnahme 5 aufweisen, wobei jeweils ein Endbereich eines stabförmigen Bewegungsbegrenzungsteils 10 in einer Aussparung 11 der zwei gegenüberliegend zueinander angeordnete Aussparungen 11 angeordnet ist.

Bevorzugt kann lediglich ein stabförmiges Bewegungsbegrenzungsteils 10 an dem dem Kupplungselement 4 gegenüberliegenden Endbereich der Zugöse 3 angeformt sein. Bevorzugt kann in diesem Fall jeweils ein Endbereich des Bewegungsbegrenzungsteils 10 in einer Aussparung 11 des Kupplungsgehäuses 2 angeordnet sein.

Als angeformt ist ein Bewegungsbegrenzungsteil 10 zu verstehen, welches einerseits bei der Ausbildung der Zugöse 3 ausgebildet werden kann, wie beispielsweise bei einem Spritzgussteil, und andererseits auch durch eine Befestigung des Bewegungsbegrenzungsteil 10 an den dem Kupplungselement 4 gegenüberliegenden Endbereich der Zugöse 3, beispielsweise durch Einschlagen eines Bolzens in ein Bohrloch oder durch Anschweißen des Bolzens an die Zugöse 3.

Bevorzugt ist der Bewegungsbegrenzungsteil 10 ein an der Zugöse 3 befestigter Bolzen. Bevorzugt ist der Bolzen dazu formschlüssig in einem durchgehenden Loch oder einem Sackloch der Zugöse 3 angeordnet.

Bevorzugt erstreckt sich das Bewegungsbegrenzungsteil 10 normal zur Längsachse der Zugöse 13 und/oder erstreckt sich normal zur horizontalen Schwenkebene 9 von der Zugöse 3 weg.

Das stabförmige Bewegungsbegrenzungsteil 10 ist dazu vorgesehen die Bewegung der Zugöse 3 gegenüber dem Kupplungsgehäuse 2 in dem Bewegungszustand 8 zu begrenzen.

In dem Fixierzustand 7 ist die Zugöse 3 mit dem Kupplungsgehäuse 2 im Wesentlichen starr verbunden. Dabei ist keine im Wesentlichen laterale oder seitliche Bewegung und keine vertikale Bewegung der Zugöse 3 gegenüber dem Kupplungsgehäuse 2 möglich. Der Fixierzustand 7 der Kupplungsvorrichtung 1 ist in den Fig. 5 und 6 beispielhaft gezeigt.

Durch Lösen der Arretiervorrichtung 6 wird die Kupplungsvorrichtung 1 von dem Fixierzustand 7 in den Bewegungszustand 8 übergeführt. In dem Bewegungszustand 8 ist es der Zugöse 3 möglich, zumindest in Richtung der Längsachse der Zugöse 13 aus der Aufnahme 5 heraus, und insbesondere in seitlicher oder lateraler Richtung zur Längsachse der Zugöse 13, bewegt zu werden. Diese Bewegung findet im Wesentlichen auf der horizontalen Schwenkebene 9 statt. Die horizontale Schwenkebene 9 ist beispielhaft in Fig. 2, 3 und 5 gezeigt. In der in Fig. 3 gezeigten Seitenansicht von links sowie in der in Fig. 5 gezeigten Schnittansicht der bevorzugten Ausführungsform der Kupplungsvorrichtung 1 ist weiters die Längsachse der Zugöse 13 beispielhaft gezeigt, welche sich in dieser bevorzugten Ausführungsform auf der horizontalen Schwenkebene 9 befindet.

Bevorzugt kann die Zugöse 3 in eine Hauptzugrichtung aus der Aufnahme 5 herausgezogen werden, wobei die Hauptzugrichtung in Richtung der Längsachse der Zugöse 13 verläuft.

Es ist erfindungsgemäß vorgesehen, dass die Länge der Aussparung 12 entlang der Längsachse der Zugöse 13 mindestens das 1,5-Fache, bevorzugt mindestens das 2-Fache, vorzugsweise mindestens das 3-Fache, der Dicke des Bewegungsbegrenzungsteils 14 entlang der Längsachse der Zugöse 13 ist. Die Länge der Aussparung 12 entlang der Längsachse der Zugöse 13 und die Dicke des Bewegungsbegrenzungsteils 14 entlang der Längsachse der Zugöse 13 sind in Fig. 5 gezeigt. Dadurch kann erreicht werden, dass die Zugöse 3 in dem Bewegungszustand 8 zum Kuppeln mit der Anhängerkupplung 28 aus der Aufnahme 5 herausgezogen, insbesondere in Hauptzugrichtung herausgezogen, werden kann.

Bevorzugt ist die Länge der Aussparung 12, und insbesondere - in dem Fixierzustand 7 gemessen- die Dicke des Bewegungsbegrenzungsteils 14 entlang der Längsachse der Zugöse 13, derart ausgebildet, dass die Zugöse 3 im Bewegungszustand 8 um mindestens 2 cm, besonders bevorzugt mindestens 4 cm, vorzugsweise mindestens 6 cm, herausziehbar ist. Herausziehbar bedeutet dabei entlang der Richtung der Längsachse der Zugöse 13, also in die Hauptzugrichtung.

Besonders bevorzugt kann vorgesehen sein, dass sich - bei einem Schnitt parallel zur horizontalen Schwenkebene 9 - der in der Aufnahme 5 des Kupplungsgehäuses 2 angeordnete Endbereich der Zugöse 3 in die Aufnahme 5 hinein verjüngt. Dies ist in den Fig. 6 bis 9 beispielhaft gezeigt, wobei jeweils ein Schnitt parallel zur horizontalen Schwenkebene 9 ersichtlich ist. Dadurch kann ein besonders guter Halt der Zugöse 3 in der Aufnahme 5 erreicht werden.

Bevorzugt kann sich die Aufnahme 5 des Kupplungsgehäuses 2 in die Aufnahme 5 hinein verjüngen.

Durch die Verjüngung der Aufnahme 5 und des Endbereichs der Zugöse 3 in die Aufnahme 5 hinein kann ein besonders guter Halt der Zugöse 3 in der Aufnahme 5 ausgebildet werden. Weiters kann dadurch durch die Ausbildung der Verjüngung der Aufnahme 5 und der Verjüngung des Endbereichs der Zugöse 3 besonders einfach eine Vergrößerung des seitlichen Bewegungsbereichs der Zugöse 3 relativ zur Breite der Aussparung 11 ausgebildet werden, indem eine unterschiedliche Form für die zwei Verjüngungen gewählt wird.

Besonders bevorzugt kann vorgesehen sein, dass sich - bei einem Schnitt parallel zur horizontalen Schwenkebene 9 - die Aussparung 11 des Kupplungsgehäuses 2 in die Aufnahme 5 hinein verjüngt. Dadurch kann besonders einfach eine seitliche oder laterale Bewegung der Zugöse 3 in dem Bewegungszustand 8 erreicht werden. Die seitliche oder laterale Bewegung der Zugöse 3 findet dabei auf der horizontalen Schwenkebene 9 statt.

Bevorzugt kann vorgesehen sein, dass eine maximale Breite der Aussparung 11 mindestens das 1,5-Fache, bevorzugt mindestens das 2-Fache, vorzugsweise mindestens das 3-Fache, einer zweiten Dicke des Bewegungsbegrenzungsteils ist, wobei die zweite Dicke des Bewegungsbegrenzungsteils normal zur Längsachse der Zugöse 13 und in dem Fixierzustand 7 gemessen ist.

Bevorzugt ist die maximale Breite der Aussparung 11, und insbesondere - in dem Fixierzustand 7 gemessen - die zweite Dicke des Bewegungsbegrenzungsteils, derart ausgebildet, dass die Zugöse 3 im Bewegungszustand 8 um mindestens 3 cm, besonders bevorzugt mindestens 5 cm, vorzugsweise mindestens 7 cm, in seitlicher oder lateraler Richtung schwenkbar ist. In seitlicher oder lateraler Richtung bedeutet dabei in Richtung normal zur Längsachse der Zugöse 13, also normal zur Hauptzugrichtung, und auf der horizontalen Schwenkebene 9.

Bevorzugt weist der in der Aussparung 11 angeordnete Endbereich des Bewegungsbegrenzungsteils 10 einen kreisförmigen Querschnitt auf. In diesem Fall entspricht die Dicke des Bewegungsbegrenzungsteils 14 der zweiten Dicke des Bewegungsbegrenzungsteils.

Besonders bevorzugt kann vorgesehen sein, dass das Kupplungsgehäuse 2 in Richtung der Aufnahme 5 hinein einen ersten Aufnahmeabschnitt 15 und einen nach dem ersten Aufnahmeabschnitt 15 nachfolgenden zweiten Aufnahmeabschnitt 16 entlang der Längsachse der Zugöse 13 umfasst, und dass die Aussparung 11 des Kupplungsgehäuses 2 in dem zweiten Aufnahmeabschnitt 16 angeordnet ist. Der erste und der zweite Aufnahmeabschnitt 15, 16 sind beispielhaft in der Fig. 6 gezeigt. Dadurch kann die Bewegung der Zugöse 3 in dem Bewegungszustand 8 in seitlicher Richtung verbessert werden, da die Aussparung 11 weiter in der Aufnahme 5 angeordnet ist. Weiters kann dadurch die Form der Aufnahme 5 in den Aufnahmeabschnitten 15, 16 besonders einfach unterschiedlich ausgebildet werden, wodurch sich einerseits der Halt der Zugöse 3 in der Aufnahme 5 und andererseits das Schwenkverhalten der Zugöse 3 einfach bei der Fertigung der Kupplungsvorrichtung 1 anpassen lässt.

Besonders bevorzugt kann vorgesehen sein, dass - bei einem Schnitt parallel zur horizontalen Schwenkebene 9 - das Kupplungsgehäuse 2 an wenigstens einer einer Längsseite des Kupplungsgehäuses 17 zugewandten Seite der Aufnahme 5 einen im Wesentlichen geradlinigen ersten Kupplungsgehäuseabschnitt 18 in dem ersten Aufnahmeabschnitt 15 und einen im Wesentlichen geradlinigen zweiten Kupplungsgehäuseabschnitt 19 in dem zweiten Aufnahmeabschnitt 16 aufweist, wobei ein Winkel α zwischen einer ersten Tangente 20 entlang dem ersten geradlinigen Kupplungsgehäuseabschnitt 18 und der Längsachse der Zugöse 13 größer ist als ein Winkel β zwischen einer zweiten Tangente 21 entlang dem zweiten geradlinigen Kupplungsgehäuseabschnitt 19 und der Längsachse der Zugöse 13. Dabei ist vorgesehen, dass die erste Tangente 20 und die zweite Tangente 21 mit der Längsachse der Zugöse 13 auf einer Ebene, also auf der horizontalen Schwenkebene 9, liegen. Dadurch kann ein Festfressen der Zugöse 3 in der Aufnahme 5, insbesondere wenn ein Freiraum 37 zwischen der Zugöse 3 und der Aufnahme 5 in dem Fixierzustand 7 und in dem zweiten Aufnahmeabschnitt 16 ausgebildet ist, besonders einfach verhindert werden. Durch die unterschiedlich großen Winkel kann weiters ein fester Sitz der Zugöse 3 in der Aufnahme 5 in dem Fixierzustand 7 erreicht werden.

Bevorzugt kann vorgesehen sein, dass der zweite Kupplungsgehäuseabschnitt 19 länger ist als der erste Kupplungsgehäuseabschnitt 18. Bevorzugt ist die Länge des zweiten Kupplungsgehäuseabschnittes 19 mindestens das 2-Fache, vorzugsweise mindestens das 3-Fach, des ersten Kupplungsgehäuseabschnittes 18.

Besonders bevorzugt kann vorgesehen sein, dass in dem Fixierzustand 7 der in der Aufnahme 5 angeordnete Endbereich der Zugöse 3 lediglich teilweise an dem zweiten Kupplungsgehäuseabschnitt 19 anliegt. Dies ist beispielhaft in Fig. 6 ersichtlich. Dadurch kann der Freiraum 37 zwischen dem Endbereich der Zugöse 3 in dem zweiten Aufnahmeabschnitt 16 und dem zweiten Kupplungsgehäuseabschnitt 19 ausgebildet werden. Dadurch kann der Bewegungsbereich der Zugöse 3 in seitlicher Richtung zu der Längsachse der Zugöse 13 in dem Bewegungszustand 8 auf einfache Weise erhöht werden. Weiters kann dadurch ein Festfressen der Zugöse 3 in der Aufnahme 5 reduziert werden.

Bevorzugt kann vorgesehen sein, dass die Länge der Aussparung 12 entlang der Längsachse der Zugöse 13 mindestens 25 %, besonders bevorzugt mindestens 30 %, vorzugsweise mindestens 50 %, der Länge des zweiten Aufnahmeabschnittes 16 ist.

Besonders bevorzugt kann vorgesehen sein, dass das Kupplungsgehäuse 2 einen an den zweiten Aufnahmeabschnitt 16 anschließenden und entlang der Längsachse der Zugöse 13 erstreckenden dritten Aufnahmeabschnitt 22 umfasst, und dass die Aussparung 11 an dem dritten Aufnahmeabschnitt 22 angrenzt. Dadurch kann der Bewegungsbereich der Zugöse 3 in seitlicher Richtung zu der Längsachse der Zugöse 13 in dem Bewegungszustand 8 zusätzlich verbessert werden.

Besonders bevorzugt kann vorgesehen sein, dass - bei einem Schnitt parallel zur horizontalen Schwenkebene 9 - das Kupplungsgehäuse 2 an der der wenigstens einen Längsseite des Kupplungsgehäuses 17 zugewandten Seite der Aufnahme 5 in dem dritten Aufnahmeabschnitt 22 einen zumindest teilweise abgerundeten dritten Kupplungsgehäuseabschnitt 23 aufweist. Der zumindest teilweise abgerundete dritte Kupplungsgehäuseabschnitt 23 ist in Fig. 6 beispielhaft gezeigt. Dadurch kann besonders einfach in der Aufnahme 5 ein Ende der Aufnahme 5 ausgebildet werden, welches Ende einer Beschädigung des in der Aufnahme 5 angeordneten Endbereichs der Zugöse 3 bei einem Anstoßen an das Ende reduziert. Das Ende der Aufnahme 5 ist dabei die dem Kupplungselement 4 entfernteste Stelle, an der die Zugöse 3 bei dem Hineinführen in die Aufnahme 5 ansteht.

Bevorzugt ist die Länge des ersten Aufnahmeabschnittes 15 mindestens 10 %, vorzugsweise mindestens 20 %, der Länge der Aufnahme 5. Bevorzugt ist die Länge des zweite Aufnahmeabschnittes 16 mindestens 45 %, besonders bevorzugt mindestens 55 %, vorzugsweise mindestens 65 %, der Länge der Aufnahme 5. Bevorzugt ist die Länge des dritten Aufnahmeabschnittes 22 mindestens 10 %, vorzugsweise mindestens 15 %, der Länge der Aufnahme 5. Die Länge der Aufnahme 5 und die Längen der Aufnahmeabschnitte 15, 16, 22 sind dabei entlang der Längsachse der Zugöse 13 und im Fixierzustand 7 gemessen.

Bevorzugt kann in dem Fixierzustand 7 der in dem dritten Aufnahmeabschnitt 22 angeordnete Endbereich der Zugöse 3 gegengleich zu dem dritten Kupplungsgehäuseabschnitt 23 ausgebildet sein. Bevorzugt kann das in der Aufnahme 5 angeordnete Ende der Zugöse 3 abgerundet sein. Durch das abgerundete Ende der Zugöse 3 kann bei einer seitlichen Schwenkbewegung der Zugöse 3 erreicht werden, dass das Ende an dem dritten Kupplungsgehäuseabschnitt 23 oder dem zweiten Kupplungsgehäuseabschnitt 19 entlanggeführt wird. Dadurch kann der Verschleiß der Zugöse 3 in der Aufnahme 5 reduziert werden, sowie kann das Rückführen der Kupplungsvorrichtung 1 in die Arretierposition erleichtert werden.

Bevorzugt kann die Aufnahme 5 lediglich den ersten Aufnahmeabschnitt 15, den zweiten Aufnahmeabschnitt 16 und den dritten Aufnahmeabschnitt 22 umfassen.

Besonders bevorzugt kann vorgesehen sein, dass in dem Fixierzustand 7 der in der Aufnahme 5 angeordnete Endbereich der Zugöse 3 zumindest teilweise in dem dritten Aufnahmeabschnitt 22 an dem Kupplungsgehäuse 2 anliegt. Bevorzugt kann das in der Aufnahme 5 angeordnete Ende der Zugöse 3 in dem Fixierzustand 7 an dem Kupplungsgehäuse 2 anliegen. Dies ist beispielhaft in Fig. 6 gezeigt. Dadurch kann das Rückführen der Kupplungsvorrichtung 1 in die Arretierposition besonders einfach durchgeführt werden. Dadurch braucht die Zugöse 3 lediglich derart weit in die Aufnahme 5 hineingeführt werden bis das Ende der Zugöse 3 an dem Kupplungsgehäuse 2 anliegt und anschließend zur Arretierung mittels der Arretiervorrichtung 6 fixiert werden.

Bevorzugt kann in dem Fixierzustand 7 der Endbereich der Zugöse 3 in dem dritten Aufnahmeabschnitt 22 an den zumindest teilweise abgerundeten dritten Kupplungsgehäuseabschnitt 23 anliegen.

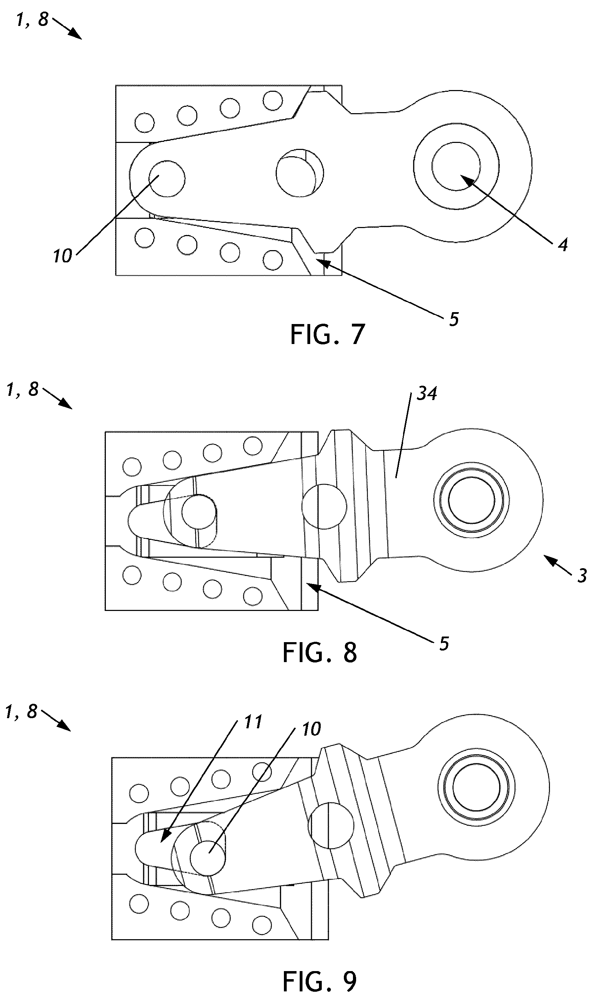

Zum Kuppeln der Kupplungsvorrichtung 1 mit der Anhängerkupplung 28 wird bevorzugt zuerst die Arretiervorrichtung 6 gelöst. Dadurch wird die Kupplungsvorrichtung 1 von dem Fixierzustand 7 in den Bewegungszustand 8 überführt. Der Fixierzustand 7 der Kupplungsvorrichtung 1 ist beispielhaft in Fig. 6 gezeigt. Der Bewegungszustand 8 der Kupplungsvorrichtung 1 ist beispielhaft in den Fig. 7 bis 9 gezeigt, wobei Fig. 8 den in Fig. 6 gezeigten Schnitt der Kupplungsvorrichtung 1 im Bewegungszustand 8 in einer ersten seitlichen oder horizontal ausgeschwenkten Position der Zugöse 3 und Fig. 9 den in Fig. 6 gezeigten Schnitt der Kupplungsvorrichtung 1 im Bewegungszustand 8 in einer zweiten seitlichen oder horizontal ausgeschwenkten Position der Zugöse 3 zeigt. In Fig. 7 ist ein weiterer Schnitt parallel zur horizontalen Schwenkebene 9 der Kupplungsvorrichtung 1 ersichtlich, wobei ersichtlich ist, dass kein gemeinsames Durchgangsloch für den Bolzen der Arretiervorrichtung 6 mehr ausgebildet ist. Wie aus dem Vergleich der Fig. 7 bis 9 deutlich hervorgeht, kann die Zugöse 3 in der horizontalen Schwenkebene 9 verschiedene Schwenkpositionen einnehmen. Mit anderen Worten ist die Zugöse 3 in dem Bewegungszustand 8 schwimmend gelagert. Dabei wird die Bewegung der Zugöse 3 durch die Größe und Form der Aussparung 11 sowie dem Bewegungsbegrenzungsteil 11 begrenzt.

In dem Bewegungszustand 8 wird das Kupplungselement 4 der Zugöse 3 mit der Anhängerkupplung 28 gekuppelt, beispielsweise indem der Kupplungsbolzen 29 der Anhängerkupplung 28 in dem Zugösenloch 36 angeordnet wird. Anschließend wird die Zugmaschine, an der die Anhängerkupplung 28 befestigt ist, oder der Fahrzeuganhänger, an dem die Kupplungsvorrichtung 1 befestigt ist, derart bewegt, dass die Zugöse 3 in die Aufnahme 5 hineingeführt wird. Dies kann auch als "auf Block fahren" bezeichnet werden. Insbesondere durch das abgerundete Ende der Zugöse 3 und die sich verjüngende Form der Aufnahme 5 in die Aufnahme 5 hinein kann dadurch erreicht werden, dass die Zugöse 3, insbesondere das abgerundete Ende der Zugöse 3, an der Kupplungsgehäusewand der Aufnahme 5 entlanggeführt wird, bis die Zugöse 3 mit dem Ende an dem Ende der Aufnahme 5 ansteht und dadurch in der Aufnahme 5 positioniert ist. In dieser Position befindet sich die Kupplungsvorrichtung 1 bevorzugt in der Arretierposition. In dieser Position wird die Kupplungsvorrichtung 1 dann mit der Arretiervorrichtung 6 fixiert, indem beispielsweise der Bolzen in dem gemeinsamen Durchgangsloch angeordnet wird.

Bevorzugt kann auch ein Verfahren zum Entkuppeln der Anhängerkupplung 28 mit der erfindungsgemäßen Kupplungsvorrichtung 1 vorgesehen sein, wobei die Kupplungsvorrichtung 1 mittels der Arretiervorrichtung 6 von dem Fixierzustand 7 in den Bewegungszustand 8 überführt wird, wobei in dem Bewegungszustand 8 die Zugöse 3 mittels des Kupplungselements 4 mit der Anhängerkupplung 28 entkuppelt wird.

Insbesondere kann beim Entkuppeln der Anhängerkupplung 28 und der Kupplungsvorrichtung 1 die Zugmaschine, an der die Anhängerkupplung 28 befestigt ist oder der Fahrzeuganhänger, an dem die Kupplungsvorrichtung 1 befestigt ist, in die Richtung bewegt, in die die Zugöse in die Aufnahme 5 hineingeführt wird. Dadurch kann insbesondere bei der Ausbildung der Arretiervorrichtung 6 aus einem Bolzen erreicht werden, dass eine geringere Spannung am Bolzen anliegt. Dadurch kann der Bolzen einfacher aus dem Durchgangsloch entfernt, insbesondere herausgeschlagen, werden. Durch dieses Überführen der Kupplungsvorrichtung 1 aus dem Fixierzustand 7 in den Bewegungszustand 8 reduziert sich die zwischen dem Kupplungselement 4 und dem Kupplungsglied der Anhängerkupplung 28, insbesondere dem Kupplungsbolzen 29, anliegende Spannung. Dadurch kann auch das Endkuppeln gegenüber herkömmlichen Kupplungsarten zwischen Zugöse und Anhängerkupplung 28, also das Herausziehen des Kupplungsbolzens 29, deutlich erleichtert werden.

Besonders bevorzugt kann vorgesehen sein, dass bei einem Längsschnitt durch die Kupplungsvorrichtung 1 und in dem Fixierzustand 7 an wenigstens einer Stelle entlang der Längsachse der Zugöse 13 die Höhe 24 der Zugöse 3 in dem ersten Aufnahmeabschnitt 15 im Wesentlichen der Höhe der Aufnahme 5 in dem ersten Aufnahmeabschnitt 15 und die Höhe 25 der Zugöse 3 in dem dritten Aufnahmeabschnitt 22 im Wesentlichen der Höhe der Aufnahme 5 in dem dritten Aufnahmeabschnitt 22 entspricht. Dies ist beispielhaft in Fig. 5 ersichtlich. Dadurch kann ein fester Sitz der Zugöse 3 in der Aufnahme 5 in dem Fixierzustand 7 erreicht werden, wodurch eine vertikale Schwenkbewegung der Zugöse 3 verhindert werden kann. Dabei kann die Zugöse 3 im Fixierzustand entlang der Längserstreckung variierende Höhen aufweisen, wobei an wenigstens einer Stelle entlang dem ersten Aufnahmeabschnitt 15 und dem dritten Aufnahmeabschnitt 22 die Höhe der Zugöse 24, 25 und die Höhe der Aufnahme 5 im Wesentlichen gleich sein müssen, damit der feste Sitz der Zugöse 3 in dem Fixierzustand 7 erreicht werden kann.

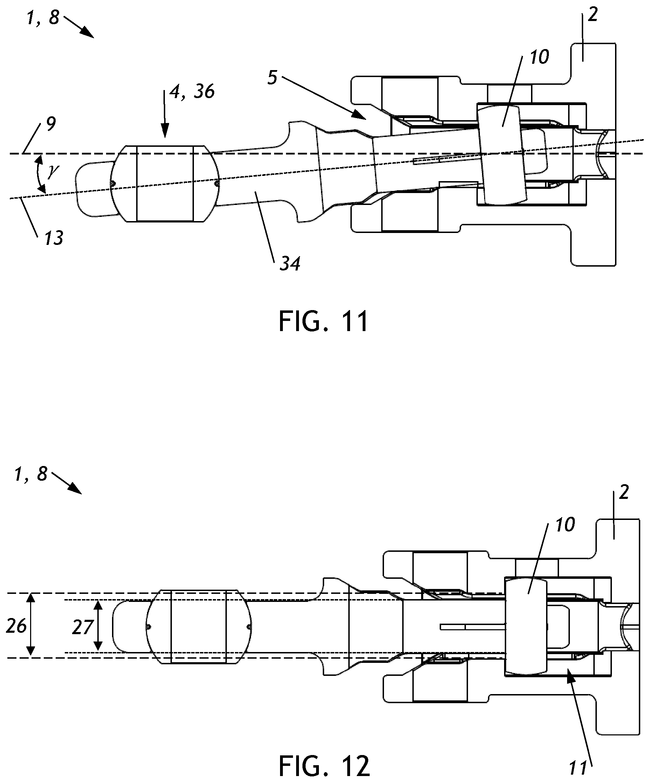

Besonders bevorzugt kann vorgesehen sein, dass bei einem Längsschnitt durch die Kupplungsvorrichtung 1 und in dem Fixierzustand 7 in wenigstens einem Bereich entlang der Längsachse der Zugöse 13 die Höhe der Zugöse 27 in dem zweiten Aufnahmeabschnitt 16 kleiner ist als die Höhe 26 der Aufnahme 5 in dem zweiten Aufnahmeabschnitt 16. Dies ist beispielhaft in den Fig. 5 und 12 gezeigt. Fig. 12 zeigt einen Längsschnitt durch die bevorzugte Ausführungsform der Kupplungsvorrichtung 1 im Bewegungszustand 8 in einer horizontalen Endposition.

In der horizontalen Endposition ist die Zugöse 3 horizontal aus der Aufnahme 5 herausgezogen, wobei die Zugöse 3 nicht vertikal geschwenkt ist. Fig. 11 zeigt einen weiteren Längsschnitt durch die bevorzugte Ausführungsform der Kupplungsvorrichtung 1 im Bewegungszustand 8 in einer vertikal ausgeschwenkten Position. Dadurch kann erreicht werden, dass die Zugöse 3 im Bewegungszustand 8 vertikal schwenkbar ist. Dies kann insbesondere vorteilhaft sein, wenn eine Kugelgelenkszugöse und/oder wenn Spielbegrenzungs-Distanzscheiben zwischen der Zugöse 3 und einem Zugmaul der Anhängerkupplung 28 verwendet werden, um das vertikale Spiel, also im gekuppelten Zustand der Anhängerkupplung 28 der freie Bereich zwischen Zugöse 3 und Zugmaul, zu reduzieren.

Bevorzugt kann die Zugöse 3 im Bewegungszustand 8 um mindestens 2 Grad, besonders bevorzugt mindestens 3 Grad, vorzugsweise mindestens 5 Grad, vertikal gegenüber der horizontalen Schwenkebene 9 und/oder dem Fixierzustand 7 schwenkbar sein. In Fig. 11 ist beispielhaft ein Winkel γ gezeigt, welcher die vertikale Schwenkmöglichkeit der Zugöse 3 zeigt. Der Winkel γ zeigt den Winkel zwischen der Längsachse der Zugöse 13 im Bewegungszustand 8 und der horizontalen Schwenkebene 9.

Bevorzugt kann bei dem Längsschnitt durch die Kupplungsvorrichtung 1 und in dem Fixierzustand 7 in wenigstens einem Bereich entlang der Längsachse der Zugöse 13 die Höhe der Aufnahme 5 in dem ersten Aufnahmeabschnitt 15 größer als die Höhe 26 der Aufnahme 5 in dem zweiten Aufnahmeabschnitt 16 sein. Dadurch kann in Synergie mit der kleineren Ausbildung der Höhe 27 der Zugöse 3 in dem zweiten Aufnahmeabschnitt 16 gegenüber der Höhe 26 der Aufnahme 5 in dem zweiten Aufnahmeabschnitt 16 eine besonders gute vertikale Ausschwenkung der Zugöse 3 erreicht werden.

Bevorzugt kann bei dem Längsschnitt durch die Kupplungsvorrichtung 1 und in dem Fixierzustand 7 in wenigstens einem Bereich entlang der Längsachse der Zugöse 13 die Höhe 26 der Aufnahme 5 in dem zweiten Aufnahmeabschnitt 16 größer als die Höhe der Aufnahme 5 in dem dritten Aufnahmeabschnitt 22 sein.

Besonders bevorzugt kann vorgesehen sein, dass die Zugöse 3 spiegelsymmetrisch um die Längsachse 13 ausgebildet ist. Dadurch können die erfindungsgemäßen Wirkungen der Zugöse 3, insbesondere das Ausrichten der Zugöse 3 in der Aufnahme 5, also das Überführen der Kupplungsvorrichtung 1 in die Arretierposition, besonders einfach ausgebildet werden.

Bevorzugt ist die Kupplungsvorrichtung 1 - im Fixierzustand 7 und entlang der Längsachse der Zugöse 13 gemessen - mindestens 20 cm, besonders bevorzugt mindestens 25 cm, insbesondere mindestens 30 cm, lang.

Unter der Einheit Tonne ist die metrische Tonne zu verstehen.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Bei Wertebereichen sind die Endpunkte mitumfasst, sofern es sich aus dem Kontext nicht anders ergibt.

## Patentansprüche

1. Kupplungsvorrichtung (1) für einen Fahrzeuganhänger umfassend ein Kupplungsgehäuse (2) und eine Zugöse (3) mit einem Kupplungselement (4), wobei ein dem Kupplungselement (4) gegenüberliegender Endbereich der Zugöse (3) in einer Aufnahme (5) des Kupplungsgehäuses (2) angeordnet ist, wobei die Zugöse (3) mittels einer Arretiervorrichtung (6) der Kupplungsvorrichtung (1) zwischen einem Fixierzustand (7) und einem Bewegungszustand (8) überführbar ist, wobei die Zugöse (3) in dem Fixierzustand (7) mit dem Kupplungsgehäuse (2) im Wesentlichen starr verbunden ist und in dem Bewegungszustand (8) zumindest innerhalb eines begrenzten Bewegungsbereichs gegenüber dem Kupplungsgehäuse (2) auf einer horizontalen Schwenkebene (9) bewegbar ist, wobei ein im Wesentlichen stabförmiges Bewegungsbegrenzungsteil (10) an dem in der Aufnahme (5) angeordneten Endbereich der Zugöse (3) angeformt ist, wobei zumindest ein Endbereich des stabförmigen Bewegungsbegrenzungsteils (10) in einer in der Aufnahme (5) angeordneten Aussparung (11) des Kupplungsgehäuses (2) angeordnet ist und in dem Bewegungszustand (8) die Bewegung der Zugöse (3) gegenüber dem Kupplungsgehäuse (2) begrenzt, wobei - in dem Fixierzustand (7) gemessen - die Länge der Aussparung (12) entlang der Längsachse der Zugöse (13) mindestens das 1,5-Fache der Dicke des Bewegungsbegrenzungsteils (14) entlang der Längsachse der Zugöse (13) ist.

2. Kupplungsvorrichtung (1) nach Anspruch 1, **dadurch gekennzeichnet, dass** sich - bei einem Schnitt parallel zur horizontalen Schwenkebene (9) - der in der Aufnahme (5) des Kupplungsgehäuses (2) angeordnete Endbereich der Zugöse (3) in die Aufnahme (5) hinein verjüngt.

3. Kupplungsvorrichtung (1) nach Anspruch 1 oder 2, **dadurch gekennzeichnet, dass** sich - bei einem Schnitt parallel zur horizontalen Schwenkebene (9) - die Aussparung (11) des Kupplungsgehäuses (2) in die Aufnahme (5) hinein verjüngt.

4. Kupplungsvorrichtung (1) nach einem der Ansprüche 1 bis 3, **dadurch gekennzeichnet, dass** das Kupplungsgehäuse (2) in Richtung der Aufnahme (5) hinein einen ersten Aufnahmeabschnitt (15) und einen nach dem ersten Aufnahmeabschnitt (15) nachfolgenden zweiten Aufnahmeabschnitt (16) entlang der Längsachse der Zugöse (13) umfasst, und dass die Aussparung (11) des Kupplungsgehäuses (2) in dem zweiten Aufnahmeabschnitt (16) angeordnet ist.

5. Kupplungsvorrichtung (1) nach Anspruch 4, **dadurch gekennzeichnet, dass** - bei einem Schnitt parallel zur horizontalen Schwenkebene (9) - das Kupplungsgehäuse (2) an wenigstens einer einer Längsseite des Kupplungsgehäuses (17) zugewandten Seite der Aufnahme (5) einen im Wesentlichen geradlinigen ersten Kupplungsgehäuseabschnitt (18) in dem ersten Aufnahmeabschnitt (15) und einen im Wesentlichen geradlinigen zweiten Kupplungsgehäuseabschnitt (19) in dem zweiten Aufnahmeabschnitt (16) aufweist, wobei ein Winkel (α) zwischen einer ersten Tangente (20) entlang dem ersten geradlinigen Kupplungsgehäuseabschnitt (18) und der Längsachse der Zugöse (13) größer ist als ein Winkel (β) zwischen einer zweiten Tangente (21) entlang dem zweiten geradlinigen Kupplungsgehäuseabschnitt (19) und der Längsachse der Zugöse (13).

6. Kupplungsvorrichtung (1) nach Anspruch 5, **dadurch gekennzeichnet, dass** in dem Fixierzustand (7) der in der Aufnahme (5) angeordnete Endbereich der Zugöse (3) lediglich teilweise an dem zweiten Kupplungsgehäuseabschnitt (19) anliegt.

7. Kupplungsvorrichtung (1) nach einem der Ansprüche 4 bis 6, **dadurch gekennzeichnet, dass** das Kupplungsgehäuse (2) einen an den zweiten Aufnahmeabschnitt (16) anschließenden und entlang der Längsachse der Zugöse (13) erstreckenden dritten Aufnahmeabschnitt (22) umfasst, und dass die Aussparung (11) an dem dritten Aufnahmeabschnitt (22) angrenzt.

8. Kupplungsvorrichtung (1) nach Anspruch 7, **dadurch gekennzeichnet, dass** - bei einem Schnitt parallel zur horizontalen Schwenkebene (9) - das Kupplungsgehäuse (2) an der der wenigstens einen Längsseite des Kupplungsgehäuses (17) zugewandten Seite der Aufnahme (5) in dem dritten Aufnahmeabschnitt (22) einen zumindest teilweise abgerundeten dritten Kupplungsgehäuseabschnitt (23) aufweist.

9. Kupplungsvorrichtung (1) nach Anspruch 8, **dadurch gekennzeichnet, dass** in dem Fixierzustand (7) der in der Aufnahme (5) angeordnete Endbereich der Zugöse (3) zumindest teilweise in dem dritten Aufnahmeabschnitt (22) an dem Kupplungsgehäuse (2) anliegt.

10. Kupplungsvorrichtung (1) nach einem der Ansprüche 7 bis 9, **dadurch gekennzeichnet, dass** bei einem Längsschnitt durch die Kupplungsvorrichtung (1) und in dem Fixierzustand (7) an wenigstens einer Stelle entlang der Längsachse der Zugöse (13) die Höhe (24) der Zugöse (3) in dem ersten Aufnahmeabschnitt (15) im Wesentlichen der Höhe der Aufnahme (5) in dem ersten Aufnahmeabschnitt (15) und die Höhe (25) der Zugöse (3) in dem dritten Aufnahmeabschnitt (22) im Wesentlichen der Höhe der Aufnahme (5) in dem dritten Aufnahmeabschnitt (22) entspricht.

11. Kupplungsvorrichtung (1) nach einem der Ansprüche 1 bis 10, **dadurch gekennzeichnet, dass** bei einem Längsschnitt durch die Kupplungsvorrichtung (1) und in dem Fixierzustand (7) in wenigstens einem Bereich entlang der Längsachse der Zugöse (13) die Höhe (27) der Zugöse (3) in dem zweiten Aufnahmeabschnitt (16) kleiner ist als die Höhe (26) der Aufnahme (5) in dem zweiten Aufnahmeabschnitt (16).

12. Kupplungsvorrichtung (1) nach einem der Ansprüche 1 bis 11, **dadurch gekennzeichnet, dass** die Zugöse (3) spiegelsymmetrisch um die Längsachse (13) ausgebildet ist.

13. Kupplungsvorrichtung (1) nach einem der Ansprüche 1 bis 12, **dadurch gekennzeichnet, dass** das Kupplungsgehäuse (2) aus wenigstens zwei Platten ausgebildet ist, und dass in zumindest einer der wenigstens zwei Platten die Aufnahme (5) des Kupplungsgehäuses (2) ausgebildet ist.

14. Kupplungsvorrichtung (1) nach einem der Ansprüche 1 bis 13, **dadurch gekennzeichnet, dass** die Arretiervorrichtung (6) ein Arretierbolzen ist, welcher Arretierbolzen durch ein gemeinsames Durchgangsloch der Zugöse (3) und des Kupplungsgehäuses (2) steckbar ist.

15. Verfahren zum Kuppeln einer Anhängerkupplung (28) mit der Kupplungsvorrichtung (1) nach einem der Ansprüche 1 bis 14, wobei die Kupplungsvorrichtung (1) mittels der Arretiervorrichtung (6) von dem Fixierzustand (7) in den Bewegungszustand (8) überführt wird, wobei in dem Bewegungszustand (8) die Zugöse (3) mittels des Kupplungselements (4) mit der Anhängerkupplung (28) gekuppelt wird, wobei nach der Kuppelung der Zugöse (3) mit der Anhängerkupplung (28) die Zugöse (3) in eine Arretierposition gebracht wird und die Kupplungsvorrichtung (1) mittels der Arretiervorrichtung (6) in dem Fixierzustand (7) fixiert wird.
